Europäisches Patentamt

(19) European Patent Office

Office européen des brevets

(11) Numéro de publication: **0 128 837**
**B1**

(12) **FASCICULE DE BREVET EUROPEEN**

(45) Date de publication du fascicule du brevet:
03.06.87

(51) Int. Cl.⁴: **B 60 R 13/06**

(21) Numéro de dépôt: **84401190.8**

(22) Date de dépôt: **08.06.84**

(54) **Vitrage prêt à la pose notamment pour automobile.**

(30) Priorité: **10.06.83 FR 8309649**

(43) Date de publication de la demande:
**19.12.84 Bulletin 84/51**

(45) Mention de la délivrance du brevet:
**03.06.87 Bulletin 87/23**

(84) Etats contractants désignés:
**AT BE CH DE FR GB IT LI LU NL SE**

(56) Documents cités:
**EP - A - 0 081 426
DE - B - 2 838 447
FR - A - 1 578 033
FR - A - 2 043 713
FR - A - 2 508 267
GB - A - 1 186 501
US - A - 4 115 609**

(73) Titulaire: **BOUSSOIS S.A., 126-130 rue Jules Guesde, F-92302 Levallois-Perret (FR)**
Titulaire: **SOCIETE LES ADHESIFS ET INSONORISANTS MODERNES Société Anonyme, 66 rue Saint-Agnan, F-58200 Cosne sur Loire (FR)**
Titulaire: **SOCIETE DES LAQUES INDOCHINOISES ET DU CAOUTCHOUC INDUSTRIEL, 58 rue Potier Bel-Air Building, F-78150 Le Chesnay (FR)**

(72) Inventeur: **Deschamps, Bruno, 49, rue Alphonse-Baudin, F-58200 Cosne-sur-Loire (FR)**
Inventeur: **Hochart, Paul, 3, Résidence de l'Orangerie, F-78170 La Celle Saint-Cloud (FR)**
Inventeur: **Sourbe, Jean-Claude, 26, rue Guilmant, F-92190 Meudon (FR)**

(74) Mandataire: **Bouju, André, Cabinet Bouju 38 avenue de la Grande Armée, F-75017 Paris (FR)**

ACTORUM AG

## Description

La présente invention concerne un vitrage prêt à la pose dans un cadre rigide et en particulier un pare-brise ou une lunette arrière d'automobile.

Actuellement les pare-brise et lunettes arrières d'automobiles sont souvent collés à la baie correspondante de la carrosserie au moyen d'un cordon à base de caoutchouc butyle, interposé entre la périphérie du vitrage et le bord de la baie de la carrosserie.

Lors de la pose, ce cordon est chauffé jusqu'à son point de ramollissement et le vitrage est pressé vers la carrosserie de façon à écraser le cordon contre cette dernière. Le chauffage du cordon à base de caoutchouc butyle peut être réalisé au moyen d'un élément métallique électriquement résistant noyé dans le cordon et destiné à être raccordé à une source de courant pour permettre un chauffage par effet Joule. Un tel agencement pour un vitrage prêt à le pose dans un cadre rigide, en particulier pour automobile, est déjà connu par le document FR-A-2 508 267 qui correspond au préambule de la revendication 1.

Ce procédé présente deux inconvénients majeurs. D'une part il exige une presse spéciale pour presser le vitrage contre la carrosserie.

D'autre part, le démontage du vitrage ainsi collé est très difficile.

On connaît des cordons pour coller des vitrages, notamment d'automobile, à base de copolymères d'éthylène vinyle acétate ou d'éthylène éthyle acrylate, dont l'utilisation rend la pose et le démontage des vitrages beaucoup plus aisés.

Cependant, quelle que soit la technique utilisée, après la pose du vitrage, il subsiste entre la périphérie de ce dernier et le bord extérieur de la baie, un espace vide qu'il est nécessaire de combler, soit par une colle ou un mastic approprié, soit par un joint de finition collé ou emboîté dans cet espace.

Cette opération supplémentaire est exécutée manuellement et augmente ainsi notablement le temps total de la pose du pare-brise et par conséquent le coût de celle-ci.

D'autre part, par le document GB-A-1 186 501, il est connu un vitrage prêt à la pose dans un cadre rigide en particulier pour automobile comprenant tout autour de sa périphérie un joint de finition en matière plastique souple, recouvrant partiellement la face intérieure du vitrage et comportant sur sa face opposée à ladite périphérie des moyens pour réaliser l'étanchéité avec le cadre et compenser les écarts dimensionnels entre celui-ci et le vitrage.

De plus, un cordon adhésif destiné à permettre la fixation par collage du vitrage au cadre rigide est disposé contre ce joint sur la face intérieure du vitrage.

Le but de la présente invention est notamment de remédier aux inconvénients des réalisations précitées et/ou d'en faciliter la mise en place, en créant un vitrage prêt à la pose et qui n'exige, après sa mise en place sur le cadre rigide, aucune opération de finition supplémentaire.

Le vitrage prêt à la pose dans un cadre rigide en particulier pour automobile, visé par l'invention comprend sur sa face intérieure un cordon en matière thermoplastique destiné à être chauffé par effet Joule par une source de courant au moyen d'un élément métallique électriquement résistant associé au cordon et permettre ainsi sa fixation par collage au cadre rigide.

Suivant l'invention, le vitrage est caractérisé d'après la partie caractérisante de la revendication 1. En d'autres termes il comprend tout autour de sa périphérie un joint de finition en matière plastique souple recouvrant partiellement sa face intérieure et comportant sur sa face opposée à ladite périphérie des moyens pour réaliser l'étanchéité avec le cadre et compenser les écarts dimensionnels entre celui-ci et le vitrage, le cordon étant disposé contre ce joint et en ce que l'élément métallique électriquement resistant est noyé en partie dans le joint de finition, et en partie dans le cordon en matière thermoplastique pour permettre le chauffage de celui-ci par effet Joule jusqu'à sa température de ramollissement.

Le cordon en matière thermoplastique fixé au vitrage permet de coller celui-ci au cadre rigide, comme dans le cas des procédés classiques. Etant donné que ce vitrage comporte déjà sur sa périphérie un joint de finition destiné à remplir entièrement l'espace compris entre le vitrage et le bord du cadre rigide, la mise en place du vitrage conforme à l'invention n'exige aucune opération complémentaire de finition. On économise ainsi lors de la pose du vitrage un temps considérable. De plus, la pose du vitrage peut être réalisée d'une manière automatique sans aucune intervention manuelle.

En outre, le joint de finition en matière plastique constitue un excellent support pour l'élément métallique électriquement résistant. La mise en place de cet élément dans le joint de finition peut être exécutée facilement lors du moulage de ce joint.

De préférence, la matière thermoplastique du cordon est choisie dans le groupe comprenant le caoutchouc butyle, les copolymères d'éthylène vinyle acétate, les copolymères d'éthylène éthyle acrylate et leur mélange.

Ces matières thermoplastiques ont un point de fusion compris entre 100 et 150 °C qui est facilement atteint en faisant passer un courant électrique dans l'élément chauffant. A une température légèrement inférieure à leur point de fusion, ces matières thermoplastiques sont suffisamment ramollies, de sorte que lors de la pose du vitrage, il suffit d'appliquer sur ce dernier une pression de l'ordre de 10 kg/m$^2$ pour écraser le cordon et obtenir ainsi une excellente étanchéité et un très bon collage du vitrage sur le cadre rigide.

Selon une première version de l'invention, le joint de finition comporte sur sa surface adjacente au vitrage une gorge de section sensiblement en U engagée sur la périphérie du vitrage.

Cette gorge permet ainsi une fixation excellente et étanche du joint de finition autour du vitrage, sans aucun collage.

Selon une version préférée de l'invention, le joint de finition présente un bord qui est situé dans le prolongement de la face extérieure du vitrage, et l'épaisseur de ce joint de finition mesurée perpendiculairement à la face extérieure du vitrage est telle que lorsque ce dernier est en place dans le cadre rigide, le bord précité du joint de finition est situé dans le prolongement du bord extérieur du cadre rigide.

Ainsi après la pose du vitrage, il n'existe aucune saillie entre celui-ci et le bord du cadre rigide ou de la carrosserie de l'automobile par exemple dans le cas d'un pare-brise. Cette disposition est favorable dans le cas d'une automobile au coefficient de pénétration dans l'air (CX) et à l'aspect esthétique de cette dernière.

D'autre particularités et avantages de l'invention apparaîtront encore dans la description ci-après.

Aux dessins annexés donnés à titre d'exemples non limitatifs:

– la figure 1 est une vue en coupe transversale partielle d'un vitrage prêt à la pose conforme à l'invention,

– la figure 2 est une vue en coupe suivant le plan II–II de la figure 1,

– la figure 3 est une vue analogue à la figure 1, montrant le vitrage fixé dans son cadre rigide,

– la figure 4 est une vue en coupe transversale partielle d'une autre version du vitrage prêt à la pose conforme à l'invention,

– la figure 5 est une vue analogue à la figure 4 montrant le vitrage fixé dans son cadre rigide,

– la figure 6 est une vue analogue à la figure 4 d'une troisième version du vitrage prêt à la pose,

– la figure 7 est une vue analogue à la figure 6 d'une quatrième version du vitrage prêt à la pose,

– la figure 8 est une vue analogue à la figure 7 montrant le vitrage fixé dans son cadre rigide.

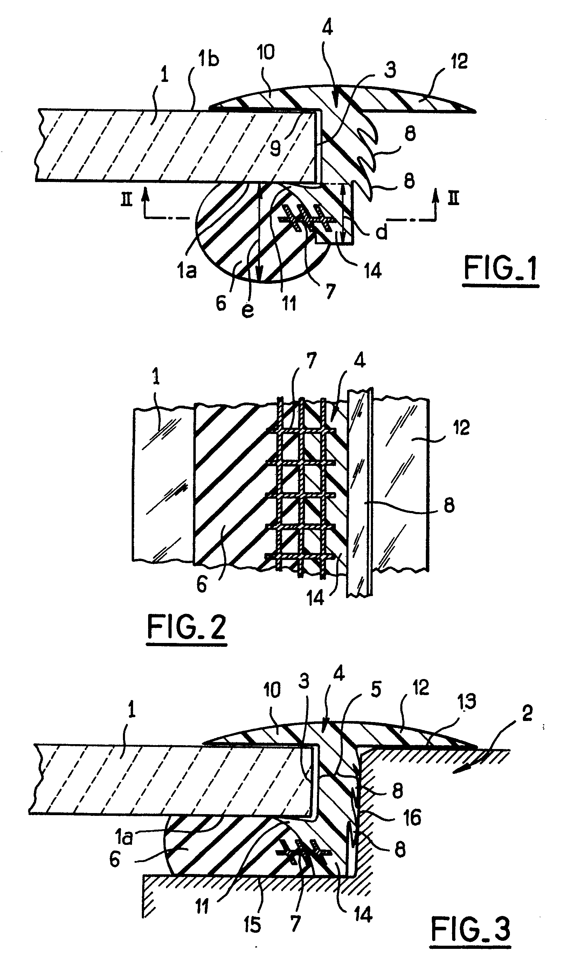

Dans la réalisation des figures 1 à 3, le vitrage 1 tel qu'un pare-brise d'automobile prêt à être posé dans le cadre rigide 2 (voir figure 3) de la carrosserie d'une automobile, comprend tout autour de sa périphérie 3 un joint de finition 4 en matière plastique souple telle que du polypropylène. Ce joint 4 est destiné à remplir entièrement l'espace 5 compris entre la périphérie 3 du vitrage et le cadre rigide 2.

Le vitrage 1 comporte en outre un cordon 6 en matière thermoplastique qui est appliqué tout autour du vitrage 1 contre la face intérieure 1a de ce dernier et contre le joint de finition 4.

Par ailleurs, un élément métallique électriquement résistant 7 en forme de grille est noyé en partie dans le joint de finition 4 et en partie dans le cordon 6 en matière thermoplastique.

Cet élément électriquement résistant 7 est destiné à être raccordé d'une façon en elle-même connue à une source de courant électrique pour permettre le chauffage du cordon 6 par effet Joule jusqu'à sa température de ramollissement.

La matière thermoplastique du cordon 6 est de préférence choisie dans le groupe comprenant le caoutchouc butyle, les copolymères d'éthylène vinyle acétate (EVA), les copolymères d'éthylène éthyle acrylate (EEA) et leur mélange.

Le joint de finition 4 comporte sur sa face opposée à la périphérie 3 du vitrage 1 des lèvres élastiques 8 inclinées, destinées à réaliser l'étanchéité avec le cadre rigide 2 comme indiqué sur la figure 3.

Par ailleurs, le joint de finition 4 comporte sur sa face adjacente au vitrage 1, une gorge de section en U qui est engagée sur la périphérie 3 du vitrage 1.

Cette gorge en U 9 est définie par deux ailes 10, 11 appliquées respectivement sur la face extérieure 1b et la face intérieure 1a du vitrage. L'aile extérieure 10 qui est plus longue que l'aile intérieure 11 est prolongée au-delà de la face du joint qui comporte les lèvres 8 par une aile 12 destinée à recouvrir le bord extérieur 3 du cadre rigide 2, comme indiqué sur la figure 3.

Les deux ailes 10, 12 présentent un profil extérieur bombé favorable à l'égard du coefficient de pénétration dans l'air de l'automobile équipée du vitrage 1.

Par ailleurs, le joint de finition 4 comporte une partie 14 en saillie par rapport à la face intérieure 1a du vitrage 1, qui est destinée à venir en butée contre le bord intérieur 15 du cadre rigide 2, comme indiqué sur la figure 3.

Le cordon 6 en matière thermoplastique présente une épaisseur e mesurée perpendiculairement à la face 1a du vitrage 1 qui est supérieure à la longueur d de la partie en saillie 14 du joint 4, de façon que ce cordon 6 puisse s'écraser lors du montage du vitrage 1 contre le bord intérieur 15 du cadre rigide 2.

Pour fixer le vitrage 1 dans le cadre rigide 2 on procède comme suit:

On pose le vitrage 1 muni de son joint de finition 4 et de son cordon de collage 6 sur le cadre rigide 2, le cordon 6 prenant appui contre le bord intérieur 15 du cadre 2 et les lèvres élastiques 8 du joint 4 s'appliquant contre l'épaulement 16 du cadre 2,

on raccorde l'élément électriquement résistant 7 à une source de courant pour chauffer par effet Joule, la matière thermoplastique du cordon 6 jusqu'à sa température de ramollissement; lors de cette opération, l'élément électriquement résistant 7, grâce à sa disposition à l'écart du vitrage 1, ne risque pas d'échauffer trop fortement ce dernier,

on presse le vitrage 1 vers l'intérieur du cadre rigide 2 pour écraser le cordon 6 contre le bord intérieur 15 de ce cadre jusqu'à ce que la partie en saillie 14 et l'aile 12 du joint 4 viennent en butée respectivement contre le bord intérieur 15 et le bord extérieur 13 du cadre 2.

Après refroidissement, la matière thermoplastique du cordon 6 adhère fortement à la surface intérieure 1a du vitrage 1 et au bord intérieur 15 du cadre 2 et réalise une excellente étanchéité entre ce dernier et la périphérie du vitrage 1.

Par ailleurs, le joint de finition 4 est solidement fixé dans l'espace 5 compris entre le vitrage 1 et le cadre 2 et réalise une étanchéité parfaite entre ce cadre 2 et le vitrage 1, sans qu'aucune opération manuelle complémentaire de finition soit nécessaire.

On comprend que la pose du vitrage 1 dans le cadre 2 peut être exécutée d'une manière entièrement automatique au moyen par exemple de robots.

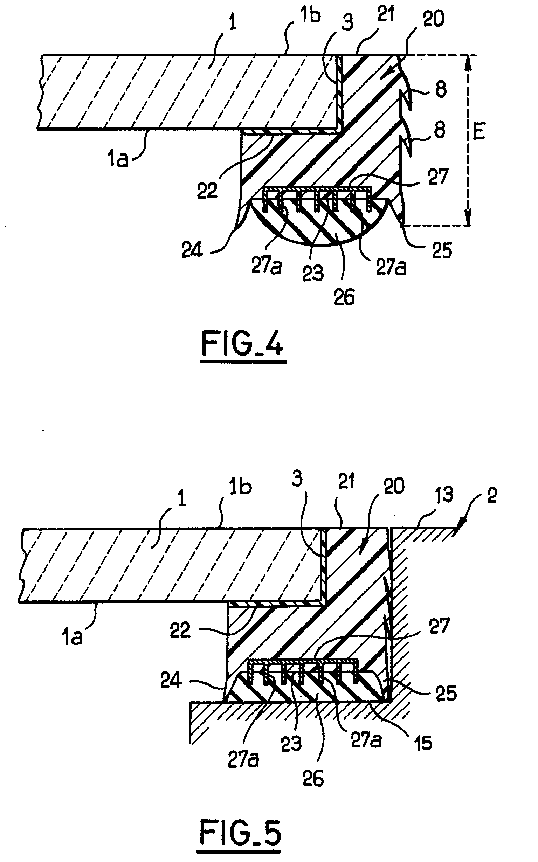

Dans la réalisation des figures 4 et 5, le vitrage 1 comporte à sa périphérie 3, un joint de finition 20 dont le bord extérieur 21 est situé dans le prolongement de la face extérieure 1b du vitrage 1.

L'épaisseur totale E du joint 20 mesurée perpendiculairement à la face extérieure 1b du vitrage 1 est telle que lorsque ce dernier est en place dans le cadre rigide 2, comme indiqué sur la figure 5, le bord extérieur 21 du joint de finition est situé dans le prolongement du bord extérieur 13 du cadre rigide 2.

Dans l'exemple représenté sur les figures 4 et 5, le joint de finition 20 a une section transversale en forme de L. Sa fixation à la périphérie 3 et à la face intérieure 1a du vitrage 1 est réalisée par une couche de colle 22 ou par thermocollage de la matière plastique du joint 20 sur le verre.

Le joint de finition 20 comporte à l'opposé de son bord extérieur 21, une cavité 23 bordée par deux lèvres extérieures 24, 25 dans laquelle est placé un cordon 26 en matière thermoplastique analogue à celle du cordon 6.

Le volume du cordon 26 est sensiblement égal à celui de la cavité 23, mais l'épaisseur de ce cordon 26 est supérieure à la profondeur de cette cavité 23.

Un élément électriquement résistant 27 en forme de grille est noyé dans la matière plastique du joint de finition 20. Cet élément 27 s'étend parallèlement au fond de la cavité 23 et à une faible distance de ce fond. Cet élément 27 comporte des lamelles 27a perpendiculaires au fond de la cavité et faisant saillie dans cette dernière en pénétrant dans le cordon 26.

Pour fixer le vitrage 1 dans le cadre rigide 2, on procède comme dans le cas de la réalisation sur les figures 1 à 3.

Lorsque le vitrage 1 est en place dans le cadre rigide 2, la matière thermoplastique du cordon 26 rempli toute la cavité 23 et adhère fortement au joint de finition 20 et au bord intérieur du cadre rigide 2.

Les lamelles 27a de l'élément chauffant 27, tout en permettant un excellent transfert de chaleur lors du chauffage du cordon 26, contribuent à améliorer l'adhérence de ce dernier au fond de la cavité 23 du joint 20.

Par ailleurs, étant donné que le bord extérieur 21 du joint de finition 20 est situé exactement dans le prolongement de la face extérieure 1b du vitrage 1 et du bord extérieur 13 du cordon 2, on évite toute saillie ou discontinuité dans le raccordement extérieur du vitrage 1 et du cadre 2 susceptible dans le cas d'une automobile d'affecter le coefficient de pénétration dans l'air de celle-ci.

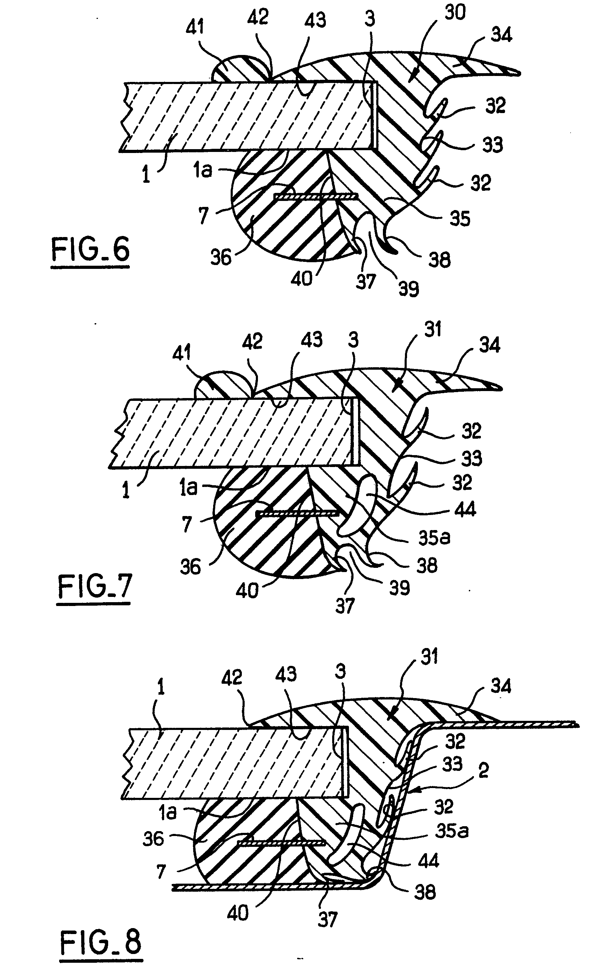

Les figures 6 à 8 représentent deux versions améliorées du vitrage prêt à la pose conforme à l'invention.

Dans ces réalisations, le joint de finition 30, 31 monté tout autour du vitrage permet de rattraper d'importants écarts dimensionnels à la fois dans les directions situées dans le plan du vitrage et dans la direction perpendiculaire au vitrage 1.

Dans le cas de la réalisation de la figure 6, ce résultat est obtenu grâce à des lèvres élastiques 32 ou «lécheurs» situés sur la face 33 du joint 1 qui est sensiblement perpendiculaire au vitrage 1. Ces lèvres 32 sont dirigées vers le haut du joint 1, c'est-à-dire vers l'aile 34 qui est destinée à recouvrir le cadre rigide par exemple de la carrosserie d'une automobile. Ces lèvres 32 forment un angle aigu avec la face 33 du joint 1.

La partie 35 du joint 30 située à l'opposé de l'aile 34 et contre laquelle est appliquée le cordon 36 en matière thermoplastique présente deux lèvres 37, 38 sensiblement parallèles définissant entre elles un évidement 39. L'une 37 de ces lèvres est appliquée contre le cordon 36 et est située dans le prolongement de la face 40 contre laquelle est appliquée le cordon 36.

Les longueurs des lèvres 32 et 37, 38 sont calculées de façon à rattraper les écarts dimensionnels existant dans la direction du plan du vitrage 1 et dans une direction perpendiculaire à cette dernière, compte tenu des tolérances de fabrication du vitrage 1 et du cadre rigide sur lequel ce dernier doit être fixé.

On voit également sur la figure 6, que l'aile 34 du joint 30 présente à son extrémité qui recouvre le vitrage 1 un bourrelet 41 relié à cette extrémité par une zone de faible épaisseur 42 qui permet l'arrachement de ce bourrelet. Ce bourrelet 41 permet d'augmenter la profondeur de la gorge 43 du joint 30 dans laquelle est engagée le vitrage 1, ce qui facilite considérablement le montage du joint 30 sur la périphérie du vitrage 1.

La réalisation des figures 7 et 8 est sensiblement identique à celle de la figure 6, excepté que la partie 35a du joint 31 située à l'opposé de l'aile 34 et contre laquelle est appliquée le cordon 36 présente une cavité fermée 44.

Cette cavité 44 augmente la déformabilité de cette partie 35a dans la direction du plan du vitrage 1 et dans une direction perpendiculaire à celle-ci, de sorte qu'elle joue un rôle identique et complémentaire à celui des lèvres 37, 38 et 32. On voit en effet sur la figure 8 que lorsque le vitrage 1 est posé dans le cadre rigide 2, les lèvres 32 fléchissent vers la face 33 du joint 31 en compensant les variations dimensionnelles pouvant exister entre le vitrage 1 et le cadre 2, tandis que les lèvres 37, 38 fléchissent vers la face du joint opposée à son aile 34 en compensant les variations dimensionnelles existant dans cette direction entre le vitrage 1 et le cadre 2.

Les variations dimensionnelles existant dans les deux directions perpendiculaires précitées sont également compensées en partie par le fait que la cavité 44 peut s'écraser dans toutes les directions.

Sur la figure 8, on voit que le bourrelet 41 a été arraché après la pose du vitrage 1 dans le cadre 2.

Les joints 31 et 32 peuvent être réalisés facilement sous la forme d'un profilé extrudé.

La matière thermofusible constituant le cordon 6, 26 ou 36 présente de préférence les caractéristiques suivantes:

A – aucun tâchage et étanche à l'eau

B – dureté Shore A: 50 à 80

C – durée de vie: infinie, sans aucune altération de ses propriétés dans le temps

D – aucune coulure jusqu'à 125 °C.

Dans le tableau ci-après on a indiqué les résistances à la traction R en DaN/cm$^2$ ou à la traction-cisaillement d'un tel cordon de collage soumis à un traitement de vieillissement accéléré. Les valeurs indiquées dans ce tableau appellent les remarques suivants:

– le collage du verre sur de la tôle d'acier est opéré d'une part sur du verre émaillé ou non et d'autre part sur de la tôle traitée par cataphorèse et peinte avec vernis ou métallisée,

– le vieillissement retenu est déterminé par la méthode dite du «cataplasme humide» imposée par les constructeurs automobiles; la résistance initiale est désignée par $H_0$, tandis que les résistances mesurées au bout de 3, 7, 14, 21 jours sont désignées par $H_3$, $H_7$, $H_{14}$, $H_{21}$.

| Tempé-rature °C | $H_0$ | $H_3$ | $H_7$ | $H_{14}$ | $H_{21}$ |
|---|---|---|---|---|---|
| −30 °C | ≥15 | ≥15 | ≥15 | ≥15 | ≥15 |
| 0 °C | ≥15 | ≥15 | ≥15 | ≥15 | ≥15 |
| 20 °C | ≥15 | ≥15 | ≥15 | ≥15 | ≥15 |
| 50 °C | ≥ 6 | ≥ 6 | ≥ 6 | ≥ 6 | ≥ 6 |
| 80 °C | ≥ 1 | ≥ 1 | ≥ 1 | ≥ 1 | ≥ 1 |

L'allongement à la rupture est ≥500% quelle que soit la température ou la durée du vieillissement.

Bien entendu, l'invention n'est pas limitée aux exemples que l'on vient de décrire, et on peut apporter à ceux-ci de nombreuses modifications sans sortir du cadre de l'invention.

Ainsi, le chauffage du cordon 6, 26 ou 36, au lieu d'être réalisé au moyen d'un élément chauffant 7 ou 27 intégré, peut être effectué par chauffage extérieur par exemple par infrarouge.

Un tel chauffage permet également de démonter facilement le vitrage 1 en cas de détérioration de celui-ci.

Bien entendu, la présente invention peut s'appliquer à d'autres vitrages que les pare-brise ou lunettes arrières d'automobile.

Dans le cas de la réalisation selon les figures 4 et 5, le cordon 26 au lieu d'être placé dans une cavité telle que 23 peut être appliqué sur le côté du joint de finition, comme dans le cas des figures 1 à 3, ce joint ne comportant dans ce cas aucune aile 10, 12, son bord étant dans le prolongement du vitrage 1.

## Renvendications

1. Vitrage prêt à la pose dans un cadre rigide (2) en particulier pour automobile, ce vitrage comprenant sur sa face intérieure (1a) un cordon (6, 26, 36) en matière thermoplastique destiné à être chauffé par effet Joule par une source de courant au moyen d'un élément métallique électriquement résistant associé au cordon et permettant ainsi sa fixation par collage au cadre rigide, ce vitrage comprenant tout autour de sa périphérie (3) un joint de finition (4, 20, 30, 31) en matière plastique souple comportant sur sa face opposée à ladite périphérie des moyens (8, 32) pour réaliser l'étanchéité avec le cadre (2) et compenser les écarts dimensionnels entre celui-ci et le vitrage, caractérisé en ce que le joint de finition (4, 20, 30, 31) recouvre partiellement la face intérieure (1a) du vitrage, le cordon (6, 26, 26) est disposé contre ce joint (4, 20, 30, 31) et en ce que l'élément métallique électriquement résistant (7, 27) est noyé en partie dans le joint de finition (4, 20, 30, 31) et en partie dans le cordon (6, 26, 36) en matière thermoplastique pour permettre le chauffage.

2. Vitrage conforme à la revendication 1, caractérisé en ce que la matière thermoplastique du cordon (6, 26, 36) est choisie dans le groupe comprenant le caoutchouc butyle, les copolymères d'éthylène vinyle acétate, les copolymères d'éthylène éthyl acrylate et leur mélange.

3. Vitrage conforme à l'une des revendications 1 ou 2, caractérisé en ce que le joint de finition (4, 20, 30, 31) comporte sur sa face opposée à la périphérie (3) du vitrage (1), une ou plusieurs lèvres élastiques (8, 32).

4. Vitrage conforme à l'une des revendications 1 à 3, caractérisé en ce que le joint de finition (4, 30, 31) comporte sur sa surface adjacente au vitrage (1), une gorge (9, 43) de section sensiblement en U qui est engagée sur la périphérie (3) du vitrage.

5. Vitrage conforme à la revendication 4, caractérisé en ce que l'aile (10) de la gorge (9, 43) adjacente à la face extérieure (1b) du vitrage est prolongée au-delà de la face du joint comportant la ou les lèvres élastiques (8, 32) par une aile (12, 34) destinée à recouvrir le bord extérieur (13) du cadre rigide (2).

6. Vitrage conforme à l'une des revendications 1 à 5, caractérisé en ce que le joint de finition (4, 30, 31) comporte une partie (14, 35, 35a) en saillie par rapport à la face intérieure (1a) du vitrage, destinée à venir en butée contre le cadre rigide (2) et en ce que le cordon (6, 36) en matière thermo-plastique présente une épaisseur (l) mesurée per-pendiculairement à la face intérieure (1a) du vi-trage, qui est supérieure à la longueur (d) de la partie (14, 35, 35a) en saillie du joint de finition (4, 30, 31).

7. Vitrage conforme à l'une des revendications 1 à 3, caractérisé en ce que le joint de finition (20) présente un bord (21) qui est situé dans le prolongement de la face extérieure (1b) du vitrage (1).

8. Vitrage conforme à la revendication 7, caractérisé en ce que l'épaisseur (E) du joint de finition (20) mesurée perpendiculairement à la face exté-rieure (1b) du vitrage est telle que lorsque ce dernier est en place dans le cadre rigide (2), le bord (21) du joint de finition est situé dans le prolongement du bord extérieur (13) du cadre rigide (2).

9. Vitrage conforme à l'une des revendications 7 ou 8, caractérisé en ce que la section du joint de finition (20) est sensiblement en forme de L.

10. Vitrage conforme à l'une des revendications 7 à 9, caractérisé en ce que le joint de finition (20) est fixé à la périphérie (3) du vitrage par collage (22).

11. Vitrage conforme à l'une des revendications 7 à 10, caractérisé en ce que le joint de finition (20) comporte à l'opposé de son bord (21) situé dans le prolongement de la face extérieure (1b) du vitrage, une cavité (23) bordée par deux lèvres (24, 25), dans laquelle est placé le cordon (26) en matière thermoplastique, le volume de cette cavité (23) étant sensiblement ègal à celui du cordon (26).

12. Vitrage conforme à la revendication 11, caractérisé en ce que l'élément électriquement résistant (27) de chauffage par effet Joule est une grille noyée dans le joint de finition (20), s'étendant parallèlement au fond de la cavité (23) à une faible distance de ce fond, cet élément comportant des lamelles (27a) faisant saillie dans la cavité (23) et pénétrant dans le cordon (26).

13. Vitrage conforme à l'une des revendications 1 à 6, caractérisé en ce que la partie (35, 35a) du joint (30), comporte à son extrémité opposée à la face extérieure du vitrage des lèvres flexibles (37, 38) sensiblement parallèles et orientées dans la direction de la face (40) du joint (30) sur laquelle est appliqué le cordon (36).

14. Vitrage conforme à la revendication 13, caractérisé en ce que la partei (35, 35a) du joint (30) comporte une cavité fermée (44).    -

15. Vitrage conforme à l'une des revendications 5, 6, 13 ou 14, caractérisé en ce que l'extrémité de l'aile (34) qui recouvre la face extérieure du vitrage comporte on bourrelet (41) relié à cette extrémité par une zone de faible épaisseur permettant l'arrachement de ce bourrelet.

**Patentansprüche**

1. Verglasung, die zum Einsetzen in einen starren Rahmen (2) bereit ist, insbesondere für ein Kraftfahrzeug, wobei die Verglasung auf ihrer Innenfläche (1a) eine Schnur (6, 26, 36) aus thermoplastischem Material umfasst, die dazu bestimmt ist, von einer Stromquelle aus mittels eines der Schnur zugeordneten elektrischen Widerstandselements aus Metall, durch Jouleschen Effekt erwärmt zu werden und damit ihre Befestigung an dem starren Rahmen durch Verklebung zu erlauben, und wobei die Verglasung um ihren gesamten Umfang (3) herum eine Abschlussdichtung (4, 20, 30, 31) aus nachgiebigem Kunststoff umfasst, die auf ihrer von dem genannten Umfang abgewandten Fläche Mittel (8, 32) aufweist, um die Abdichtung mit dem Rahmen (2) zu bewerkstelligen und die Abmessungsunterschiede zwischen diesem und der Verglasung zu kompensieren, dadurch gekennzeichnet, dass die Abschlussdichtung (4, 20, 30 31) teilweise die

Innenfläche (1a) der Verglasung bedeckt, dass die Schnur (6, 26, 36) an diese Dichtung (4, 20, 30, 31) anliegend angeordnet ist, und dass das metallische elektrische Widerstandselement (7, 27) teilweise in die Abschlussdichtung (4, 20, 30, 31) und teilweise in die Schnur (6, 26, 36) aus thermoplastischem Material eingebettet ist, um die Erwärmung zu erlauben.

2. Verglasung nach Anspruch 1, dadurch gekennzeichnet, dass das thermoplastische Material der Schnur (6, 26, 36) ausgewählt ist aus der Gruppe bestehend aus Butylkautschuk, den Äthylenvinylacetat-Copolymeren, den Äthylenäthylacrylat-Copolymeren und deren Mischungen.

3. Verglasung nach Anspruch 1 oder 2, dadurch gekennzeichnet, dass die Abschlussdichtung (4, 20, 30, 31) auf ihrer von dem Umfang (3) der Verglasung (1) abgewandten Fläche eine oder mehrere elastische Lippen (8, 32) aufweist.

4. Verglasung nach einem der Ansprüche 1 bis 3, dadurch gekennzeichnet, dass die Abschlussdichtung (4, 30, 41) auf ihrer an die Verglasung (1) angrenzenden Oberfläche eine Nut (9, 43) von im wesentlichen U-förmigem Querschnitt aufweist, welche auf den Umfang (3) der Verglasung geschoben ist.

5. Verglasung nach Anspruch 5, dadurch gekennzeichnet, dass der Flügel (10) der Nut (9, 43), welcher an die Aussenfläche (1b) der Verglasung angrenzt, über diejenige Fläche der Dichtung hinaus, welche die eine oder mehreren elastischen Lippen (8, 32) aufweist, durch einen Flügel (12, 34) verlängert ist, der dazu bestimmt ist, den äusseren Rand (13) des starren Rahmens (2) abzudecken.

6. Verglasung nach einem der Ansprüche 1 bis 5, dadurch gekennzeichnet, dass die Abschlussdichtung (4, 30, 31) einen Teil (14, 35, 35a) umfasst, welcher in bezug auf die Innenfläche (1a) der Verglasung vorspringt und dazu bestimmt ist, an dem starren Rahmen (2) in Anlage zu gelangen, und dass die Schnur (6, 36) aus thermoplastischem Material eine senkrecht zur Innenfläche (1a) der Verglasung gemessene Dicke (e) aufweist, die grösser als die Länge (d) des vorspringenden Teils (14, 35, 35a) der Abschlussdichtung (4, 30 31) ist.

7. Verglasung nach einem der Ansprüche 1 bis 3, dadurch gekennzeichnet, dass die Abschlussdichtung (20) einen Rand (21) aufweist, der in der Verlängerung der Aussenfläche (1b) der Verglasung (1) liegt.

8. Verglasung nach Anspruch 7, dadurch gekennzeichnet, dass die Dicke (E) der Abschlussdichtung (20), senkrecht zu der Aussenfläche (1b) der Verglasung gemessen, derart ist, dass der Rand (21) der Abschlussdichtung, wenn die Verglasung in den starren Rahmen (2) eingesetzt ist, in der Verlängerung des Aussenrandes (13) des starren Rahmens (2) liegt.

9. Verglasung nach Anspruch 8 oder 9, dadurch gekennzeichnet, dass der Querschnitt der Abschlussdichtung (20) im wesentlichen L-förmig ist.

10. Verglasung nach einem der Ansprüche 7 bis 9, dadurch gekennzeichnet, dass die Abschlussdichtung (20) am Umfang (3) der Verglasung durch Verklebung (22) befestigt ist.

11. Verglasung nach einem der Ansprüche 7 bis 10, dadurch gekennzeichnet, dass die Abschlussdichtung (20) gegenüber ihrem Rand (21), welcher in der Verlängerung der Aussenfläche (1b) der Verglasung liegt, einen von zwei Lippen (24, 25) gesäumten Hohlraum (23) aufweist, in dem die Schnur (26) aus thermoplastischem Material angeordnet ist, wobei das Volumen dieses Hohlraumes (23) im wesentlichen gleich demjenigen der Schnur (26) ist.

12. Verglasung nach Anspruch 11, dadurch gekennzeichnet, dass das elektrische Widerstandselement (27) zur Erwärmung durch Jouleschen Effekt ein in die Abschlussdichtung (20) eingebettetes Gitter ist, welches sich parallel zum Grund des Hohlraumes (23) in geringem Abstand von diesem Grund erstreckt, wobei dieses Element Lamellen (27a) umfasst, die in den Hohlraum (23) hineinragen und in die Schnur (26) eindringen.

13. Verglasung nach einem der Ansprüche 1 bis 6, dadurch gekennzeichnet, dass der Teil (35, 35a) der Dichtung (30) an seinem von der Aussenfläche der Verglasung abgewandten Ende flexible Lippen (37, 38) umfasst, die im wesentlichen parallel sind und in der Richtung derjenigen Fläche (40) der Dichtung (30) orientiert sind, gegen die die Schnur (36) angelegt ist.

14. Verglasung nach Anspruch 13, dadurch gekennzeichnet, dass der Teil (35, 35a) der Dichtung (30) einen geschlossenen Hohlraum (44) umfasst.

15. Verglasung nach einem der Ansprüche 5, 6, 13 oder 14, dadurch gekennzeichnet, dass dasjenige Ende des Flügels (34), welches die Aussenfläche der Verglasung bedeckt, eine Wulst (41) umfasst, der an dieses Ende über eine Zone geringer Dicke angeschlossen ist, die das Abreissen dieses Wulstes gestattet.

## Claims

1. A glass pane ready for fitting in a rigid frame (2), more particularly for motor vehicles, the pane having on its inside surface (1a) a plastic cord or tape or the like (6, 26, 36) heatable electrically through Joule effect by means of an electrically resistive metal element associated with the cord or tape or the like and thus to be secured to the rigid frame (2) by sticking, the pane having right around its periphery (3) a flexible plastics finishing seal (4, 20, 30, 31) having on its surface remote from such periphery means (8, 32) for providing a sealing connection with the frame (2) and for compensating for dimensional differences between the same and the pane, characterised in that the finishing seal (4, 20, 30, 31) covers some of the pane inside surface (1a), the cord or tape or the like (6, 26, 36) is disposed in contact with the seal (4, 20, 30, 31) and the electrically resistive metal element (7, 20) ist embedded partly in the seal (4, 20, 30, 31) and partly in the cord (6, 26, 36) to enable heating.

2. A pane according to claim 1, characterised in that the plastics used for the cord (6, 26, 36) is selected from the group comprising butyl rubber, ethylene vinyl acetate copolymers, ethylene ethyl acrylate copolymers and their mixture.

3. A pane according to claim 1 and/or 2, characterised in that the seal (4, 20, 30, 31) has one or more resilient lips (8, 32) on the surface remote from the pane periphery (3).

4. A pane according to any of claims 1–3, characterised in that the seal (4, 30, 31) is formed in its surface adjacent thee pane (1) with a substantially U-section groove (9, 43) which is engaged on the pane periphery (3).

5. A pane according to claim 4, characterised in that the groove flank (10) adjacent the pane outside surface (1b) is prolonged beyond the seal surface having the or each resilient lip (8, 32) by an arm (12, 34) adapted to cover the outside edge (13) of the rigid frame (2).

6. A pane according to any of claims 1–5, characterised in that the seal (4, 30, 31) has a part (14, 35, 35a) which projects from the pane inside surface (1a) and which is adapted to about the rigid frame (2), and the cord (6, 36) has a thickness (e) measured perpendicularly to the pane inside surface (1a) which is greater than the length (d) of the projecting part (14, 35, 35a).

7. A pane according to any of claims 1–3, characterised in that the seal (20) has an edge (21) disposed in extension of the pane outside surface (1b).

8. A pane according to claim 7, characterised in that the thickness (E) of the seal (20) measured perpendicularly to the pane outside surface (1b) is such that, with the pane positioned in the rigid frame (2), the seal edge (21) is disposed in extension of the outside edge (13) of the frame (2).

9. A pane according to claime 7 and/or 8, characterised in that the seal (20) is in section substantially L-shaped.

10. A pane according to any of claims 7–9, characterised in that the seal (20) is secured to the pane periphery (3) by sticking (22).

11. A pane according to any of claims 7–10, characterised in that the seal (20) is formed, opposite its edge (21) disposed in extension of the pane outside surface (1b), with a cavity (23) edged by two lips (24, 25), such cavity receiving the cord (26), the volume of the cavity (23) being substantially equal to the volume of the cord (26).

12. A pane according to claim 11, characterised in that the electrically resistant heating element (20) is a lattice embedded in the seal (20) and extending parallel to the base of the cavity (23) at a short distance from such base, the element (27) having lamellae (28a) which project into the cavity (23) and penetrate into the bead (26).

13. A pane according to any of claims 1–6, characterised in that the seal part (35, 35a) has, at the end remote from the outside surface of the pane, substantially parallel flexible lips (37, 38) oriented in the direction of the seal surface (40) to which the bead (36) is applied.

14. A pane according to claim 13. characterised in that the seal part (35, 35a) is formed with a closed cavity (44).

15. A pane according to any of claims 5, 6, 13 or 14, characterised in that that end of the arm (34) which covers the pane outside surface has a bead (41) connected to such end by a reduced-thickness zone enabling such bead to be torn off.

FIG. 1

FIG. 2

FIG. 3

FIG_4

FIG_5

FIG_6

FIG_7

FIG_8